# EUROPEAN PATENT APPLICATION

(11) **EP 3 957 988 A1**
(43) Date of publication of application: **23.02.2022**
(21) Application number: 20192125.1
(22) Date of filing: 21.08.2020
(51) Int. Cl.: G01N 30/08, G01N 30/20, G01N 30/12, G01N 30/88, G01N 30/40, G01N 30/02

(54) **METHOD FOR MEASURING METHANE AND TOTAL NON-METHANE HYDROCARBONS**

(71) Applicant: Synspec B.V., 9747 AV Groningen (NL)
(72) Inventor: Lautenbach, Wouter Eschyle, 9351 ZK Leek (NL)
(74) Representative: 't Jong, Bastiaan Jacob

(57) **Abstract**

The invention relates to a method for measuring Methane and Total Non Methane Hydro Carbons (TNMHC), which method comprises the steps of:
- providing a gas chromatograph having a sample injection port;
- providing a sample loop assembly comprising in serial fluid connection a first port, a preconcentration trap for trapping non methane hydro carbons, a sample loop and a second port;
- providing a carrier gas supply;
- loading the sample loop assembly with a sample by feeding air containing methane and non methane hydro carbons via the first port to the sample loop assembly;
- connecting the second port of the sample loop assembly with the sample injection port of the gas chromatograph and connecting the carrier gas supply to the first port of the sample loop assembly for measuring the amount of methane with the gas chromatograph;
- disconnecting the sample loop assembly from the the sample injection port and the carrier gas supply and connecting the first port of the sample loop assembly with the sample injection port of and connecting the carrier gas supply to the second port of the sample loop assembly;
- heating the preconcentration trap for releasing the trapped non methane hydro carbons for measuring the amount of non methane hydro carbons with the gas chromatograph.

## Description

The invention relates to a method for measuring Methane and Total Non Methane Hydro Carbons (TNMHC), which method comprises the steps of:
- providing a gas chromatograph having a sample injection port;
- providing a sample loop assembly comprising in serial fluid connection a first port, a preconcentration trap for trapping non methane hydro carbons, a sample loop and a second port;
- providing a carrier gas supply;
- loading the sample loop assembly with a sample by feeding air containing methane and non methane hydro carbons via the first port to the sample loop assembly;
- connecting the second port of the sample loop assembly with the sample injection port of the gas chromatograph and connecting the carrier gas supply to the first port of the sample loop assembly for measuring the amount of methane with the gas chromatograph.

In order to measure the course of air-pollution in time, it is known to regularly measure the amount of methane and the amount of non methane hydro carbons in the air.

Methane is excluded in air-pollution contexts because it is not harmful, although it is an important greenhouse gas. The exclusion of methane is necessary due to its relatively high ambient concentration in comparison to other atmospheric species and its relative inertness. Therefore, typically the amount of methane and the amount of non methane hydro carbons is measured in the air to determine the amount of air-pollution.

One known method for measuring Methane and Total Non Methane Hydro Carbons is by taking an air sample through a (cooled) preconcentration trap into a sample loop. The TNMHC is trapped into the preconcentration trap, while the methane is stored into the sample loop.

Then in reverse direction, the sample is injected through the preconcentration trap into a gas chromatograph to detect the amount of methane. After the detection of methane the preconcentration trap is heated to release the trapped TNMHC, which is then detected by the gas chromatograph.

A benefit of this method is that a real separation occurs of methane and TNMHC. Also low detection limits can be achieved as the sample of TNMHC is enriched by the preconcentration trap.

Drawback of this known method is a relative long sample time and during the injection of methane some light boiling point hydrocarbons will come of the trap as well and will be measured as methane. By cooling down the preconcentration and using high efficiency trapping materials for the low boiling hydrocarbons this problem can be solved, but by doing this a part of the methane will be trapped also. The methane value will be lowered and during release of the hydrocarbons from the trap by heating the trapped methane will be released and measured as TNMHC. As a result the accuracy of the measurements is not optimal.

Accordingly it is an object of the invention to reduce or even remove the above mentioned disadvantages. This object is achieved according to the invention with a method according to the preamble, which is characterized by:
- disconnecting the sample loop assembly from the sample injection port and the carrier gas supply and connecting the first port of the sample loop assembly with the sample injection port of and connecting the carrier gas supply to the second port of the sample loop assembly; and
- heating the preconcentration trap for releasing the trapped non methane hydro carbons for measuring the amount of non methane hydro carbons with the gas chromatograph.

With the known methods according to the prior art, in which a preconcentration trap is used, the sample is always taken from the sample loop assembly in the reverse direction, in which the sample was loaded into the sample loop assembly.

With the invention the sample is extracted from the sample loop assembly in the same direction in which the sample was loaded, when the amount of methane is to be measured and the direction is reversed when the amount of TNMHC is to be measured. As a result the TNMHC of the sample will be better trapped in the preconcentration trap, such that more accurate measurements can be achieved.

A preferred embodiment of the method according to the invention further comprises the step of cooling the preconcentration trap while loading the sample loop assembly with a sample. By cooling the preconcentration trap an improvement in the separation between methane and light boiling point hydrocarbons will be obtained, which further improves the accuracy of the method according to the invention.

In another embodiment of the method according to the invention the gas chromatograph comprises a flame ionisation detector. A flame ionisation detector is low cost, robust and low maintenance, while providing a linear detection range for the methane and non methane hydro carbons.

It is further preferred that the carrier gas I hydrogen, in particular in combination with a flame ionisation detector. The flame ionisation detector is powered by hydrogen and by using hydrogen as carrier gas, the operation of the detector is maintained optimal and is not influenced by an other type of carrier gas.

The invention further relates to a sample loop assembly for a method according to the invention, which sample loop assembly comprises in serial fluid connection a first port, a preconcentration trap for trapping non methane hydro carbons, a sample loop and a second port, the assembly further comprising a first three-way valve, which is connected with one valve port to the first port and a second three-way valve, which is connected with one valve port to the second port.

The first and second three-way valve allow for reversing the flow direction through the sample loop assembly when both the first three-way valve and second three-way valve are connected with their respective two remaining ports to a sample injection port and a carrier gas supply of the gas chromatograph. By selecting the correct position for both the first and second three-way valve will ensure in the desired flow direction through the sample loop assembly.

The invention also relates to a combination of a sample loop assembly according to the invention and a gas chromatograph having a sample injection port and a carrier gas supply, wherein both the first three-way valve and second three-way valve are connected with their respective two remaining ports to the sample injection port and the carrier gas supply of the gas chromatograph.

These and other features of the invention will be elucidated in conjunction with the accompanying drawings.
Figure 1 shows an embodiment of a combination according to the invention in a position for loading a sample of air.
Figure 2 shows the combination according to figure 1 in a position for measuring the amount of methane in the sample.
Figure 3 shows the combination according to figure 1 in a position for measuring the amount of TNMHC in the sample.

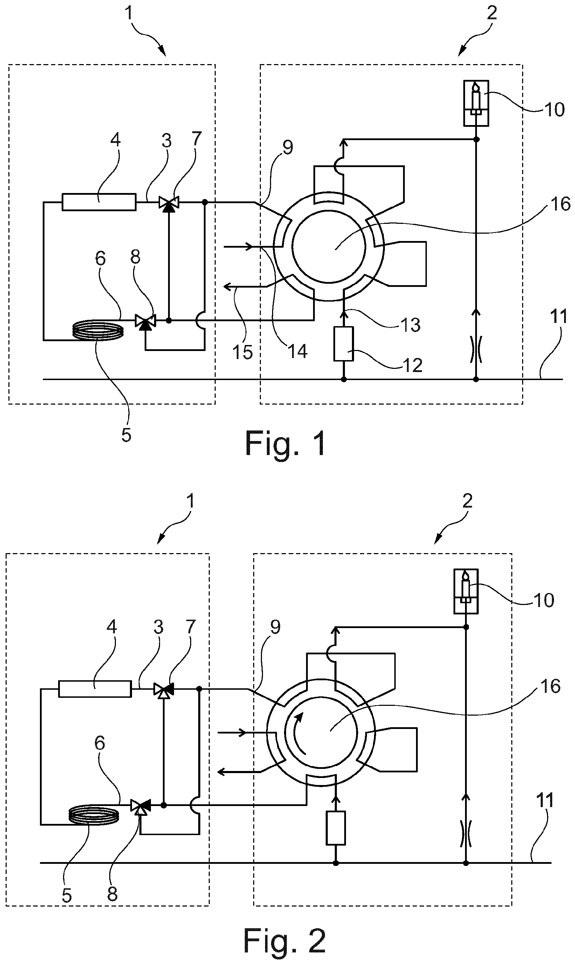

Figure 1 shows schematically a sample loop assembly 1 according to the invention and a gas chromatograph 2. The sample loop assembly comprises in serial fluid connection a first port 3, a preconcentration trap 4 for trapping non methane hydro carbons, a sample loop 5 and a second port 6.

A first three-way valve 7 is connected with one valve port to the first port 3. A second three-way valve 8 is connected with one valve port to the second port 6.

The gas chromatograph 2 is provided with a sample injection port 9, a flame ionisation detector 10 and a carrier gas supply 11, which powers the flame ionisation detector 10 and provides a supply 13, via a filter 12, for connection to the sample loop assembly 1.

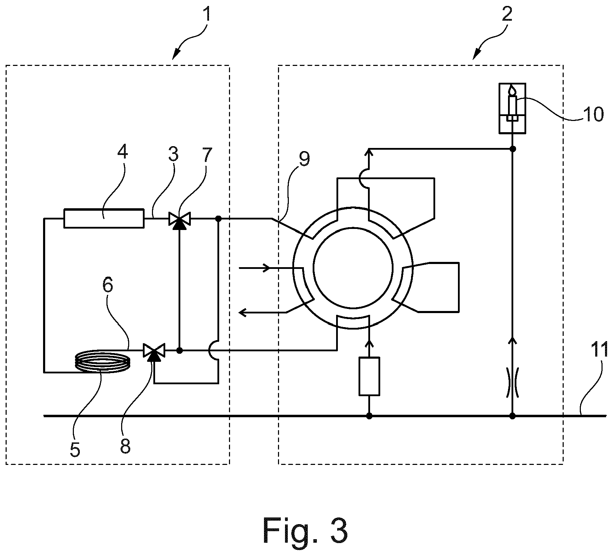

The gas chromatograph 2 is furthermore provided with a 10 ports diaphragm valve 16, which allows for switching between a first position (as shown in figure 1), in which a sample is loaded via a sample load port 14 into the sample loop assembly 1 and discharge the sample loop assembly 1 via a discharge port 15 on the gas chromatograph 2, and a second position (as shown in figures 2 and 3) in which the sample is retrieved from the sample loop assembly 1 and examined by the gas chromatograph 2.

Figure 1 shows the first position of the 10 ports diaphragm valve 16, which allows for loading of an air sample via de sample load port 14, through the first three-way valve 7, the first port 3, the preconcentration trap 4, into the sample loop 5. Any excess sample is discharged via the second port 6, the second three-way valve 8 through the 10 ports diaphragm valve 16 to the discharge port 15.

In the preconcentration trap 14 non methane hydro carbons (NMHC) are captured and separated from the methane, which is stored in the sample loop 5.

In figure 2 the 10 ports diaphragm valve 16 is put in the second position in order to retrieve the sample from the sample loop assembly 1 and examine the sample with the gas chromatograph 2. The three-way valves 7 and 8 are also switched into their other position, such that carrier gas from carrier gas supply 11 is fed to the first port 3 of the sample loop assembly 1 and pushes the methane sample in the sample loop 5 towards the second port 6, through the second three-way valve 8 into the sample injection port 9 of the gas chromatograph 2, which can determine with the flame ionisation detector 10 the amount of methane, which was present in the sample.

After the full sample from the sample loop 5 has been examined, both three-way valves 7, 8 are switched back to their first position, such that the carrier gas from the carrier gas supply 11 is fed through the second three-way valve 8 and the second port 6 of the sample loop assembly 1. As a result the flow direction in the sample loop assembly 1 is reversed.

Now the preconcentration trap 4 is heated to release the stored non methane hydro carbons (NMHC), which are carried with the carrier gas through the first port 3, the first three-way valve towards the sample injection port 9 of the gas chromatograph 2 in order to determine the amount of the total non methane hydro carbons (TNMHC) with the flame ionisation detector 10.

## Claims

1. Method for measuring Methane and Total Non Methane Hydro Carbons (TNMHC), which method comprises the steps of:
- providing a gas chromatograph having a sample injection port;
- providing a sample loop assembly comprising in serial fluid connection a first port, a preconcentration trap for trapping non methane hydro carbons, a sample loop and a second port;
- providing a carrier gas supply;
- loading the sample loop assembly with a sample by feeding air containing methane and non methane hydro carbons via the first port to the sample loop assembly;
- connecting the second port of the sample loop assembly with the sample injection port of the gas chromatograph and connecting the carrier gas supply to the first port of the sample loop assembly for measuring the amount of methane with the gas chromatograph;
**characterized by**
- disconnecting the sample loop assembly from the the sample injection port and the carrier gas supply and connecting the first port of the sample loop assembly with the sample injection port of and connecting the carrier gas supply to the second port of the sample loop assembly;
- heating the preconcentration trap for releasing the trapped non methane hydro carbons for measuring the amount of non methane hydro carbons with the gas chromatograph.

2. Method according to claim 1, further comprising the step of cooling the preconcentration trap while loading the sample loop assembly with a sample.

3. Method according to claim 1 or 2, wherein the gas chromatograph comprises a flame ionisation detector.

4. Method according to claim 3, wherein the carrier gas is hydrogen.

5. Sample loop assembly for a method according to one of the preceding claims, which sample loop assembly comprises in serial fluid connection a first port, a preconcentration trap for trapping non methane hydro carbons, a sample loop and a second port, the assembly further comprising a first three-way valve, which is connected with one valve port to the first port and a second three-way valve, which is connected with one valve port to the second port.

6. Combination of a sample loop assembly according to claim 5 and a gas chromatograph having a sample injection port and a carrier gas supply, wherein both the first three-way valve and second three-way valve are connected with their respective two remaining ports to the sample injection port and the carrier gas supply of the gas chromatograph.
